# EUROPEAN PATENT APPLICATION

(11) **EP 4 560 138 A1**
(43) Date of publication of application: **28.05.2025**
(21) Application number: 23383212.0
(22) Date of filing: 25.11.2023
(51) Int. Cl.: F03D 7/04

(54) **METHODS FOR DETERMINING WAKE BEHAVIOR AND CONTROLLERS**

(71) Applicant: General Electric Renovables España S.L., 08005 Barcelona (ES)
(72) Inventor: JACQUET, Clement, 08005 Barcelona (ES); SHARTZER, Samuel Bryan, Greenville, 29607 (US); KERN, Stefan, 85748 Garching (DE)
(74) Representative: Bardehle Pagenberg S.L.

(57) **Abstract**

The present disclosure relates to methods (100, 200) for determining wake behavior in a wind farm. A method (100) comprises determining (100) a metric that is indicative of atmospheric instability for a plurality of wind turbines in the wind farm, selecting (120) a set of wind turbines of the plurality of wind turbines for which the corresponding metric indicates lowest atmospheric instability, determining (130) the atmospheric instability based on wind conditions at the selected set of wind turbines, and determining (140) the wake behavior in the wind farm based on the determined atmospheric instability. The present disclosure further relates to wind farm controllers (36), wind turbines (10) and wind farms.

## Description

The present disclosure relates to methods for determining wake behavior in a wind farm and to methods for controlling wind turbines in a wind farm in the presence of a wake. The present disclosure further relates to wind farm controllers, wind farms and wind turbines. The present disclosure further relates to methods for determining control setpoints for wind turbines.

This invention was made under a CRADA NREL CRADA No. 21-21476; NTESS No. 2024.00; PNNL No. 566 among General Electric Renewable Energy; Engie North America Inc. and Alliance for Sustainable Energy, LLC; Battelle Memorial Institute, Operator of Pacific Northwest National Laboratory; National Technology & Engineering Solutions of Sandia, LLC operated for the United States Department of Energy. The Government has certain rights in this invention.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

Wind turbines are usually arranged in wind farms. A wind farm comprises a plurality of wind turbines which are placed relatively close to each other. The wind turbines are generally arranged in groups, for example in strings, and connected to a wind farm busbar. The wind farm busbar is connected to the electrical grid by a switch. The switch regulates the connection between the wind farm and the electrical grid.

When a first wind turbine obtains energy from an incoming wind flow, this wind flow changes downstream the wind turbine rotor. For example, the downstream wind flow may be more turbulent and may have a lower speed than the wind flow upstream the wind turbine rotor. The changed wind flow may be referred to as wake, and the wake advances downstream until a free-stream wind flow is recovered. Free-stream wind flow may be understood as a wind flow which is not affected or changed by for example a wake of a wind turbine.

If a second wind turbine downstream from the first turbine is affected by the wake of the first wind turbine, it may generate less power than the first wind turbine as the incoming wind for the second wind turbine may have less energy available due to its lower speed and increased turbulence. Also the loads on the second wind turbine may be higher as the wind is more turbulent. In some control schemes of a wind farm or wind turbine, the first wind turbine and/or the second wind turbine may be controlled for avoiding or reducing the effect of a wake on the second wind turbine. For example, the speed of the rotor of the first wind turbine may be increased, or the blades of the first wind turbine may be pitched. It is also known to e.g. change a yaw angle of the upstream wind turbine to steer the wake away from one or more downstream wind turbines.

In order to control wind turbines appropriately and in an attempt to e.g. reduce loads on wind turbines and/or increase Annual Energy Production (AEP) for the wind farm, the behavior of wakes may be determined. To this end, information about atmospheric (in)stability of the wind farm, which affects wake propagation, may be determined in order to then control the wind turbine(s) based on the determined information. A wake model may be used to determine such information. However, determining stability or instability of the wind farm may be difficult. In particular, determining wind farm (in)stability may be difficult as wakes, which are to be controlled, affect the atmospheric (in)stability.

One way to deal with this may be to determine a control setpoint for a wind turbine of a wind farm based on wind conditions at a free-stream wind turbine, e.g. on its wind direction, wind speed and/or wind turbulence, and deriving the control setpoint(s) based on the free-stream parameter(s). I.e., the free-stream wind turbines, namely the wind turbines at a "front" of the wind farm for the prevailing wind direction, i.e. front wind turbines, may be used for deriving input for the wake model and thereby input for the control of setpoints for one or more wind turbines.

However, if the surroundings of a wind farm change, e.g. due to trees or other elements or obstacles, the above manner of determining a control setpoint for an upstream wind turbine may be less robust since the front wind turbines may no longer measure an actual value of free-stream wind turbulence. The wake model that may be derived therefrom, and the consequent control of the wind turbines may be less than optimum or in any case, different from expected.

The present disclosure aims to provide improvements in methods determining wake behavior in a wind farm and in methods for controlling wind turbines for avoiding or at least reducing a wake effect on one or more downstream wind turbines.

### SUMMARY

In an aspect of the present disclosure, a method for determining wake behavior in a wind farm is provided. The method comprises determining a metric that is indicative of atmospheric instability for a plurality of wind turbines in the wind farm, and selecting a set of wind turbines of the plurality of wind turbines for which the corresponding metric indicates lowest atmospheric instability. The method further comprises determining the atmospheric instability based on wind conditions at the selected set of wind turbines, and determining the wake behavior in the wind farm based on the determined atmospheric instability.

According to this aspect, a metric that is indicative of atmospheric instability of the wind turbines of the plurality of wind turbines is determined. The wind turbines giving the lowest values of the atmospheric instability metric are selected, and the atmospheric instability is determined at the selected set of wind turbines. The wake behavior in the wind farms is then determined based on the atmospheric instability.

Therefore, actual atmospheric conditions of each of the wind turbines of the plurality of wind turbines may be considered, for example both for wind turbines located at the "front" (depending on the wind direction) and for wind turbines that are not located at the front. The atmospheric conditions may for example be measured both for wind turbines along a perimeter of the wind farm and more centrally located wind turbines. The wind conditions at those wind turbines that indicate lowest atmospheric instability, i.e. at the selected set of wind turbines, may be regarded as providing the best information on the free stream wind conditions. This also allows, if for example the layout or geometry of the plurality of the wind turbine varies, to take the variations into account and determine a suitable atmospheric instability even with the variations. A reliable and robust method is therefore provided. Variations in geometry or layout may for example include trees, new wind turbines and others. The selected set of wind turbines may for example include one or more wind turbines that are not at a front of the wind farm taking into account a prevailing wind direction.

Atmospheric stability generally arises from the thermal stratification of the atmosphere and is linked to how wind speed and turbulence behave. Atmospheric stability may indicate the likelihood of air rising or descending due to buoyancy. Under unstable conditions, for example triggered by solar heating of the floor surface, the more turbulent buoyant air may tend to rise and flow over obstacles. Under stable conditions, the air may be colder near the surface than higher up and, therefore, may tend to sink. Atmospheric stability affects turbine performance as well as wake advection, propagation and dissipation. It may be understood that atmospheric instability leads to quicker dissipation of wakes in a wind farm. Throughout this disclosure, a metric indicative of atmospheric instability metric may refer to a metric, e.g. a parameter or magnitude, which is indicative of atmospheric instability in a certain plurality of wind turbines of the wind farm, e.g. in all the wind farm. Herein, the terms metric indicative of atmospheric instability and atmospheric instability metric are used interchangeably.

In a further aspect of the present disclosure, a method for determining a control setpoint for a wind turbine of a wind farm is provided. The method comprises monitoring turbulence intensity of a group of wind turbines of the wind farm; and based on the monitored turbulence intensity, determining for which wind turbines the monitored turbulence intensity is below a threshold of turbulence intensity. The method further comprises, for the determined wind turbines, determining an average value of turbulence intensity; and based at least on the average value of turbulence intensity, determining the control setpoint.

In yet a further aspect of the present disclosure, a wind farm controller is provided. The wind farm controller is configured to control the wind turbines of the wind farm. The controller may be a wind turbine controller in some examples, i.e. a controller arranged with, e.g. within, a wind turbine. In other examples, the wind farm controller may be arranged remoted from the wind turbines.

In yet a further aspect of the present disclosure, a wind farm is provided. The wind turbine comprises the controller of the previous aspect and a plurality of wind turbines.

### BRIEF DESCRIPTION OF THE DRAWINGS

Figure 1 illustrates a perspective view of one example of a wind turbine;
Figure 2 illustrates a simplified, internal view of one example of the nacelle of the wind turbine of the figure 1;
Figure 3 shows a flow chart of an example of a method determining wake behavior in a wind farm;
Figures 4A and 4B schematically illustrate a top view of an example of a wind farm;
Figure 5 schematically illustrates an example of a controller; and
Figure 6 shows a flow chart of an example of a method for determining a control setpoint for a wind turbine.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

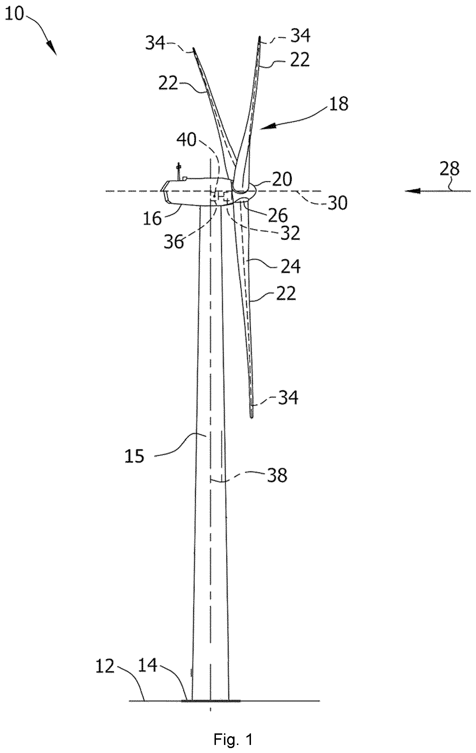

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root region 24 to the hub 20 at a plurality of load transfer regions 26. The load transfer regions 26 may have a hub load transfer region and a blade load transfer region (both not shown in figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, e.g. an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

In the example, a blade pitch of each rotor blade 22 is controlled individually by a wind turbine controller 36 or by a pitch control system 80. Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed control system throughout the wind turbine 10, on the support system 14, within a wind farm, and/or at a remote-control center. The wind turbine controller 36 may include one or more processors configured to perform one or more of the steps of the methods described herein. Further, many of the other components described herein include one or more processors. The wind turbine controller 36 may also include a memory, e.g. one or more memory devices.

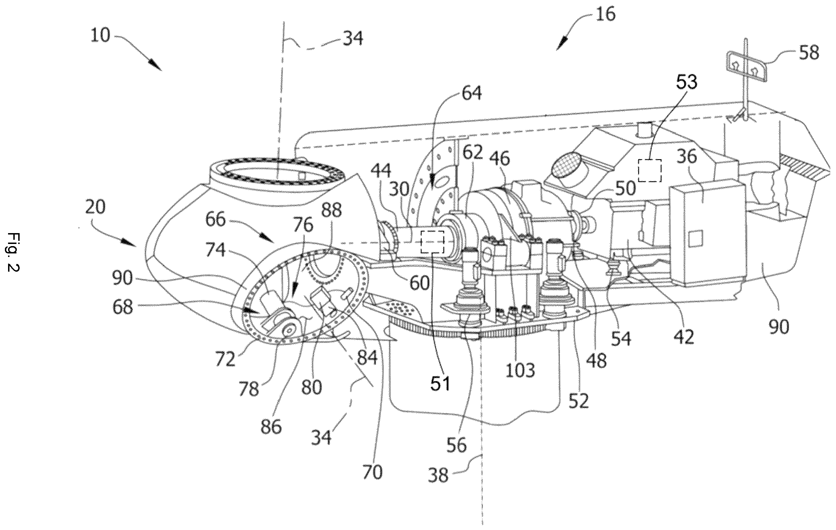

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an electric generator 42 positioned within the nacelle 16 by the main shaft 44, a gearbox 46, a high-speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high-speed shaft 48 by translating the relatively slow rotational movement of the rotor 18 and of the main shaft 44 into a relatively fast rotational movement of the high-speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between e.g. 400V to 1000 V into electrical energy having medium voltage (e.g. 10 - 35 KV). Offshore wind turbines may have for example generator voltages between 650 V and 3500 V, and transformer voltages may for instance be between 30 kV and 70 kV. Said electrical energy is conducted via power cables from the nacelle 16 into the tower 15.

In some examples, the wind turbine 10 may include one or more shaft sensors 51. The shaft sensors may be configured to monitor at least one of torque loads acting on the main shaft 44 and/or the high-speed shaft 48, and a rotational speed of the shaft 44, 48. In some examples, the wind turbine 10 may include one or more generator sensors 53. The generator sensors may be configured to monitor at least one of a rotational speed of the generator 42 and a generator torque. Shaft sensors 51 and/or generator sensors 53 may include, for instance, one or more torque sensors (e.g., strain gauges or pressure sensors), optical sensors, accelerometers, magnetic sensors, speed sensors and Micro-Inertial Measurement Units (MIMUs).

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, support 52, and forward support bearing 60 and aft support bearing 62, are sometimes referred to as a drivetrain 64.

In some examples, the wind turbine may be a direct drive wind turbine without gearbox 46. Generator 42 operates at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw drive mechanism 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system which may include a wind vane and an anemometer. The meteorological measurement system 58 can provide information to the wind turbine controller 36 that may include wind direction 28 and/or wind speed.

In the example, the pitch system 32 is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electric power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power source 84 provides power to the pitch assembly 66 only during an electric power loss event of the wind turbine 10. The electric power loss event may include power grid loss or dip, malfunctioning of an electrical system of the wind turbine 10, and/or failure of the wind turbine controller 36. During the electric power loss event, the power generator 84 operates to provide electric power to the pitch assembly 66 such that pitch assembly 66 can operate during the electric power loss event.

In the example, the pitch drive system 68, the sensor 70, the pitch control system 80, cables, and the power source 84 are each positioned in a cavity 86 defined by an inner surface 88 of hub 20. In an alternative embodiment, said components are positioned with respect to an outer surface of hub 20 and may be coupled, directly or indirectly, to the outer surface.

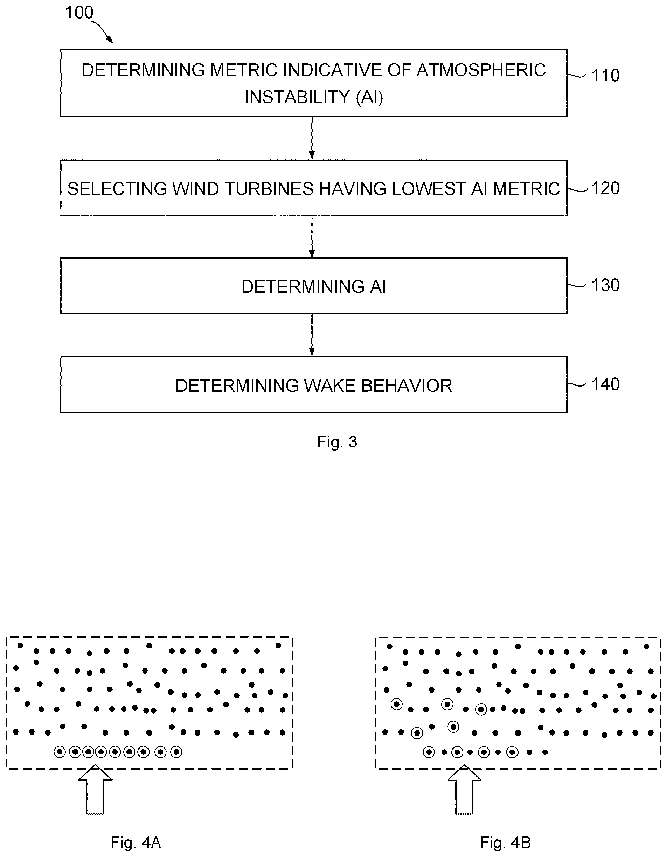

In an aspect of the present disclosure, a method 100 for determining wake behavior in a wind farm is provided. Method 100 is schematically shown in the flow chart of figure 3. The method comprises, at block 110, determining a metric that is indicative of atmospheric instability for a plurality of wind turbines in the wind farm. The method further comprises, at block 120, selecting a set of wind turbines of the plurality of wind turbines for which the corresponding metric indicates lowest atmospheric instability. The method further comprises, at block 130, determining the atmospheric instability based on wind conditions at the selected set of wind turbines. The method further comprises, at block 140, determining the wake behavior in the wind farm based on the determined atmospheric instability.

As a metric indicative of atmospheric instability is first determined for a plurality of wind turbines and then the atmospheric instability is determined for a set of wind turbines for which the atmospheric instability is actually the lowest, this method is reliable and robust against changes in the layout or geometry of the wind farm, or even with respect inaccurate wind direction measurements. If obstacles appear in the proximity of wind turbines, in particular in its surrounding, e.g. trees, new wind turbines or other, the way of determining the wake behavior in a wind farm may adapt accordingly. The actual atmospheric conditions of each of the wind turbines of the plurality of wind turbines is considered.

Determining the metric that is indicative of atmospheric instability may comprise measuring wind conditions at the plurality of wind turbines. The wind conditions may be measured using one or more suitable sensors. For example, measuring may comprise using one or more of an anemometer (e.g. a nacelle mounted anemometer) and a LIDAR (light detection and ranging). The anemometer may be used for measuring wind speed and direction. The LIDAR may also be used to measure wind speed and direction. Other suitable sensors may alternatively or additionally be used. For example, one or more of a load sensor, e.g. for determining blade load or tower load, or a rotor speed sensor may be used. Sensors may be arranged on or in the vicinity of specific wind turbines. In some examples, measurements from meteorological masts may be used.

The determination of the atmospheric instability at the selected set of wind turbines may be based on the metric indicative of atmospheric instability for the selected set of wind turbines. I.e., there may be a link between the determined metric that is indicative of atmospheric instability at block 110 and the determined atmospheric instability determined at block 130. For example, determining the atmospheric instability at the selected set of wind turbines may comprise determining an average of the metrics indicative of atmospheric instability for the selected set of wind turbines.

Averaging the different values obtained for the atmospheric instability metric may be a suitable way to obtain a value of the atmospheric instability which can be trusted. In other examples, the value of atmospheric instability may be a median value or may be another suitable value obtained from the atmospheric instability metrics of the corresponding wind turbines.

In other examples, the metric that is determined at block 110 may be different from the atmospheric instability that is determined at block 130. For example, turbulence intensity may be the metric determined at block 110, but the atmospheric instability may be determined at block 130 based on wind shear determined at the selected set of wind turbines.

The selection of the set of wind turbines for which the corresponding metric indicates lowest atmospheric instability may include storing which wind turbines are selected or not. For example, the wind turbines linked to the lowest instability metric may be stored in a memory of a controller, or the wind turbines forming the set of wind turbines instability metric may not be stored in a memory of a controller.

Selecting the set of wind turbines may comprise selecting a fixed number or fixed percentage of operational wind turbines of the plurality of wind turbines. The number of wind turbines may be fixed directly, e.g. "select 10 wind turbines" or indirectly, e.g. "select the wind turbines which meet a certain criteria". For example, the fixed number or fixed percentage may be based on a threshold, e.g. on a quantile, of the metric indicative of atmospheric instability. Non-operational wind turbines e.g. wind turbines which are down for maintenance may be ignored in some examples.

The threshold of the atmospheric instability metric may be a lower quantile or an upper quantile of the atmospheric instability metric, depending on how the metric relates to a low atmospheric instability. For example, if the atmospheric instability metric is turbulence intensity, turbulence intensity may be determined, e.g. calculated or measured, for a plurality of wind turbines. This may be determined in time intervals, e.g. 10 minutes or another suitable period of time. Turbulence intensity may for example be determined as the ratio of standard deviation of the wind speed to the average wind speed. The wind speed data monitored during a suitable period of time may be used for calculating the average wind speed and the standard deviation.

A discrete probability distribution may be obtained from these determinations. For example, and for visualization and understanding purposes, values for the turbulence intensity might be plotted in the x-axis and frequency (number of occurrences of the values of turbulence intensity) might be plotted in the y-axis. The determined data does not actually need to be plotted, and it may be stored in any suitable data structure, e.g. in a table.

Quantiles, i.e. cut points, may be defined. The quantiles divide the range of the discrete probability distribution into intervals or groups with equal probabilities.

Going back to the example of turbulence intensity, its threshold may be a lower quantile. If the lowest values of turbulence intensity are considered, there may be a high probability that these values and the corresponding wind turbines are not, or are less, affected by wakes. Therefore, the wind turbines giving values of turbulence intensity at or below the corresponding quantile are the ones which are used for selecting the set of wind turbines.

If the atmospheric instability is based on the determined turbulence intensity, an average value of turbulence intensity may be determined for the set of wind turbines.

In other examples, the threshold may be an upper quantile. For example, if the atmospheric instability metric is wind shear, a higher wind shear may be indicative of corresponding wind turbines being less affected by wakes. Accordingly, in examples like this one, the values of wind shear given by the corresponding wind turbines which are at or above a lower quantile may be used for selecting the set of wind turbines and optionally for determining the atmospheric instability too, e.g. as an average value of wind shear for the set of selected wind turbines.

Regardless of the metric indicative of atmospheric instability which is used, the use of a "low" or a "high" threshold may therefore be linked to a lower or lowest atmospheric instability metric. For the above examples, the wind turbines providing a lowest atmospheric instability metric are the wind turbines providing a lowest turbulence intensity in one example and the wind turbines providing a highest wind shear in the other example. In other words, the wind turbines which are suffering consequence of a wake or other acute instability effect which may not be applicable to the whole wind farm, are not taken into account for selecting the set of wind turbines and for determining the atmospheric instability.

The quantile may be a percentile. I.e., 100 groups of data of the atmospheric instability metric may be formed. A percentile may be a suitable quantile to use, as a sufficiently high number of groups is allowed whereas the setting of the threshold and the interpretation of the discrete probability distributions may be easier.

The wind turbines linked to an atmospheric instability metric which is at or below the ten to twenty percentiles or at or above the 80 to 90 percentiles may be determined for selecting the set of wind turbines. In other words, if the atmospheric instability metric is such that the threshold is a lower percentile, e.g. turbulence intensity, the lower percentile may e.g. be the 10th percentile, the 15th percentile or the 20th percentile. And if the atmospheric instability metric is such that the threshold is an upper percentile, e.g. wind shear, the upper percentile may e.g. be the 80th percentile, the 85th percentile or the 90th percentile. A 10th percentile (or a 90th percentile when appropriate) may be particularly suitable as threshold.

As indicated before, the threshold may be predefined, i.e. fixed. For example, the threshold may be stored in a memory of a suitable controller before the controller is installed in the wind farm. Simulations or tests with data available from existing wind farms may help to fix a suitable threshold.

The plurality of wind turbines at which wind conditions or the relevant metric are determined may in some examples include all the wind turbine of the wind farm. In other examples, the plurality of wind turbines may comprise less wind turbines, e.g. a specific subset of wind turbines may be used because they are equipped with more reliable sensors, or with more sensors than others.

The metric indicative of atmospheric instability may be turbulence intensity or wind shear, as already indicated. Still in other examples, the atmospheric instability metric may be different, e.g. it may be wind direction variability, or rotor speed variance or standard deviation, or blade load variance or standard deviation, or temperature variation. In view of the tests performed, turbulence intensity appears to identify atmospheric instability in a consistent manner and appears to be the most robust against changes in the layout or geometry of the wind farm. The use of this parameter may also be easier than the use of e.g. wind shear.

Figures 4A and 4B schematically illustrate a top view of an example of a wind farm comprising 88 wind turbines. This wind farm, as well as other wind farms, comprise wind turbines which are placed along the perimeter of the wind farm. Depending on the direction of the wind, some of these wind turbines may be "upstream" or front wind turbines. The wind farm also comprises non-front wind turbines, e.g. centrally located wind turbines. These centrally located wind turbines may be within the perimeter formed by the perimetral wind turbines.

The plurality of wind turbines of the wind farm for which the metric that is indicative of atmospheric instability is determined may comprise both turbines at or near the edge and wind turbines that are centrally located. The plurality of wind turbines may e.g. include wind turbines located at the "front" (with respect to the incoming wind direction) and wind turbines that are not located at the front, i.e. other wind turbines located elsewhere in the farm. In particular, the selected set of wind turbines may also include one or more wind turbines that are not at the front, e.g. a plurality of wind turbines at the front and others that are not.

In figures 4A and 4B, the arrow at the bottom right of the figure indicates the direction of the wind flow. Two years of data from a wind farm (different from the example shown in figures 4A and 4B) were used to test at least some steps of the method of this aspect. For the sake of illustration, the front or free-stream wind turbines, i.e. the wind turbines which are not affected by wakes for the specific wind direction indicated, are indicated in figure 4A.

Turbulence intensity was selected as the metric indicative of atmospheric instability in a specific example. In the example, turbulence intensity was determined across the entire wind farm, i.e. for the 88 wind turbines of the wind farm. With a threshold of the 10th percentile of turbulence intensity, 9 of the 88 wind turbines were selected. 9 possibly selected wind turbines are indicated for illustrative purposes in figure 4B. As can be seen, some of the selected wind turbines are front or upstream wind turbines at the edge of the wind farm, but some are more centrally located wind turbines which intuitively might not have been picked. Therefore, the proposed method provides different results than merely selecting the upstream wind turbines at the front edge of the wind farm.

The method may further comprise controlling one or more wind turbines of the wind farm by taking into account the determined wake behavior. For example, physical or mathematical equations or models, may be used to determine a wake behavior. Based on the wake behavior, one or more control setpoints may be determined e.g. by a wind farm controller.

Any suitable wake model may be used. Besides using the determined atmospheric instability, these equations or models may include interactions between wind turbines, e.g. that one wind turbine may be waked by another wind turbine. The method may also comprise identifying upstream wind turbines and downstream wind turbines, wherein the upstream wind turbines cause a wake that affects one or more downstream wind turbines. Therefore, it may be determined which wind turbines are waked and features of the wakes may also be determined for then controlling one or more wind turbines.

Controlling one or more wind turbines of the wind farm may comprise changing one or more setpoints for one or more upstream wind turbines and/or for one or more downstream wind turbines. Changing one or more setpoints may comprise e.g. the upstream wind turbine receiving a power setpoint reduction. This may result in changing pitch angle, rotor speed, yaw angle, tip speed ratio (TSR). Other parameters may alternatively or additionally be controlled, for example a yaw angle of the nacelle. Depending on a desired outcome, e.g. increasing power production of a waked downstream wind turbine and/or reducing loads on the waked downstream wind turbine, a specific setpoint, for example pitch angle or yaw angle, may be determined.

The method may therefore be used to control one or more wind turbines of the wind farm. One or more setpoints may be determined for each wind turbine to be controlled.

The above method may be performed by a controller, for example a wind farm controller. A wind farm controller may be configured to control a wind farm. In some examples, the wind farm controller may be arranged in a wind turbine of the wind farm, but in general it may be arranged elsewhere in the wind farm.

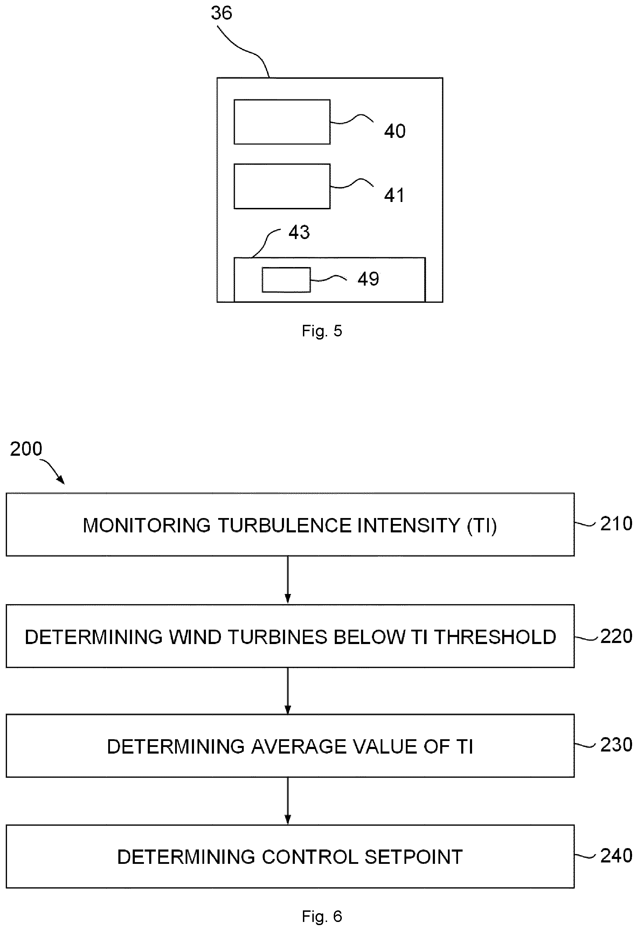

In a further aspect of the disclosure, a wind farm controller configured to perform the above method 100, as well as method 200 referred to below, is also provided. A schematic example of a controller 36 is provided in figure 5.

The controller 36 comprises a communications module 43, a processor 40 and a memory 41, e.g. one or more memory devices. The memory comprises instructions that, when executed by the processor, cause the processor to execute the steps of method 100 or method 200 (see below). A memory 41 may comprise memory element(s) including, but not limited to, a computer readable medium (e.g., random access memory (RAM)), a computer readable nonvolatile medium (e.g., a flash memory), a floppy disk, a compact disc-read only memory (CD-ROM), a magneto-optical disk (MOD), a digital versatile disc (DVD) and/or other suitable memory elements. Such memory device(s) 41 may generally be configured to store suitable computer-readable instructions that, when implemented by the processor(s) 40, configure the controller 36 to perform, or trigger the performance of, various steps disclosed herein. A memory 41 may also be configured to store data, e.g. predefined data or data from measurements and/or calculations.

The controller 36 comprises a processor 40. As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits.

Additionally, the controller 36 also includes a communications module 43 to facilitate communications between the controller 36 and the various components of the wind turbine 10 or elements of the wind farm. For instance, the communications module 43 may serve as an interface to permit the controller 36 to transmit control signals to a pitch drive system 66 for controlling the pitch angle of the rotor blades 22 or to a yaw drive mechanism 56 for rotating the nacelle 16. If the wind farm controller is not arranged with a wind turbine, the communications module 43 may also serve as an interface for transmitting signals from the remote wind farm controller to a controller arranged in a corresponding wind turbine.

The communications module 43 may be configured to communicatively connect the controller 36 with other elements of the wind turbine 10 or the wind farm. Connecting may be carried out via a wired connection and/or via a wireless connection, e.g. by using any suitable wireless communications protocol known in the art. Moreover, the communications module 43 may include a sensor interface 49, e.g. one or more analog-to-digital converters, to permit signals transmitted from one or more sensors, e.g. from meteorological measurement system 58, to be converted into signals that can be understood and processed by the processor(s) 40.

In a further aspect of the disclosure, a wind farm comprising a plurality of wind turbines and the above controller is provided.

Still in a further aspect of the disclosure, a method 200 for determining a control setpoint for a wind turbine, e.g. for an upstream wind turbine, of a wind farm is provided. Method 200 is shown in the flow chart of figure 6. Aspects and explanations with respect to method 100 may be combined and applied to method 200 and *vice versa.*

The method comprises, at block 210, monitoring turbulence intensity at a group of wind turbines of the wind farm. In some examples, the group of wind turbines may include all the wind turbines of the wind farm. In other examples, less wind turbines than the totality of wind turbines of the wind farm may be included in the group. The group may include a plurality of non-front wind turbines. For example, the group may include non-front wind turbines and more downstream or central wind turbines. In some examples, the group may include perimetral and non-perimetral wind turbines.

The method further comprises, at block 220 and based on the monitored turbulence intensity, determining for which wind turbines the monitored turbulence intensity is below a threshold of turbulence intensity. The threshold may be predefined. In some examples, the threshold may be a lower quantile of turbulence intensity. The quantile may be a percentile, and the lower quantile may be a tenth percentile of turbulence intensity in some of these examples.

The method further comprises, at block 230, for the determined wind turbines, determining an average value of turbulence intensity. The method further comprises, at block 240 and based at least on the average value of turbulence intensity, determining the control setpoint for the wind turbine.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for determining wake behavior in a wind farm, the method comprising:
determining (110) a metric that is indicative of atmospheric instability for a plurality of wind turbines in the wind farm;
selecting (120) a set of wind turbines of the plurality of wind turbines for which the corresponding metric indicates lowest atmospheric instability;
determining (130) the atmospheric instability based on wind conditions at the selected set of wind turbines; and
determining (140) the wake behavior in the wind farm based on the determined atmospheric instability.

2. The method of claim 1, wherein determining (110) the metric that is indicative of atmospheric instability comprises measuring wind conditions at the plurality of wind turbines.

3. The method of claim 1 or claim 2, wherein the selected set of wind turbines includes one or more wind turbines that are not at a front of the wind farm taking into account an instantaneous wind direction.

4. The method of any of claims 1 - 3, wherein the determination (130) of the atmospheric instability at the selected set of wind turbines is based on the metric indicative of atmospheric instability for the selected set of wind turbines.

5. The method of claim 4, wherein determining (130) the atmospheric instability at the selected set of wind turbines comprises determining an average of the metrics indicative of atmospheric instability for the selected set of wind turbines.

6. The method of any of claims 1 - 5, wherein selecting (120) the set of wind turbine comprises selecting a fixed number or fixed percentage of operational wind turbines of the plurality of wind turbines.

7. The method of claim 6, wherein the fixed number or fixed percentage is based on a threshold, optionally a quantile, of the metric indicative of atmospheric instability.

8. The method of any of claims 1 - 7, wherein the metric indicative of atmospheric instability is one or more of the following: turbulence intensity, wind shear, wind direction variability, variance or standard deviation of a rotor speed, or variance or standard deviation of one or more blade loads.

9. The method of any of claims 1 - 8, wherein the plurality of wind turbines includes all the wind turbines of the wind farm.

10. The method of any of claims 1 - 9, further comprising controlling one or more wind turbines (10) of the wind farm by taking into account the determined wake behavior.

11. The method of claim 10, further comprising identifying upstream wind turbines and downstream wind turbines, wherein the upstream wind turbines cause a wake that affects one or more downstream wind turbines.

12. The method of claim 11, wherein controlling one or more wind turbines (10) of the wind farm comprises changing one or more setpoints for one or more of the upstream wind turbines and/or for one or more of the downstream wind turbines.

13. The method of claim 12, wherein changing one or more setpoints comprises changing one or more of the following: pitch angle, rotor speed, yaw angle, tip speed ratio, power and/or tilt angle of a nacelle.

14. A wind farm controller (36) configured to perform the method of any of claims 1 - 13.

15. A wind farm comprising a plurality of wind turbines (10) and the wind farm controller (36) of claim 14.
